# EUROPEAN PATENT APPLICATION

(11) **EP 4 803 033 A1**
(43) Date of publication of application: **09.09.2026**
(21) Application number: 23813793.9
(22) Date of filing: 30.10.2023
(51) Int. Cl.: A61C 1/08, A61C 3/02

(54) **ADJUSTABLE GUIDE SYSTEM FOR POSITIONING DENTAL IMPLANTS**

(71) Applicant: Biotechnology Institute, I MAS D, S.L., 01005 Vitoria (ES)
(72) Inventor: ANITUA ALDECOA, Eduardo, 01005 VITORIA-GASTEIZ Álava (ES)
(74) Representative: Cueto, Sénida
(86) International application number: PCT/ES2023/070640
(87) International publication number: WO 2025/093785

(57) **Abstract**

The invention discloses an adjustable guiding system (1) for placing dental implants comprising: a tool (2) having a head (21); a drill (3) configured for fixation to the head (21); a set of bushings (4) configured for fixation to the head (21); and a splint (5) having an anatomical shape configured to abut against the maxillary bone of the patient, where the splint (5) comprises at least a guide hole (51) for the bushings (4). Further, the fixation between the actuation head (21) and the bushing (4) is configured to provide at least two working positions of the bushing (4) longitudinally separated one from the other. This fixation is preferably carried out by means of a bayonet connection or a special threaded connection.

## Description

### OBJECT OF THE INVENTION

The present invention belongs to the field of odontology, and more particularly to the dental implantology sector.

A first object of the present invention is a new guiding system for placing implants allowing for a length adjustment.

A second object of the present invention is a guiding system having an adapter having a novel design.

### PRIOR ART

Dental implants are a solution to replace lost or damaged teeth. A dental implant is an element that is introduced into the maxillary bone and onto which a crown or prosthesis is subsequently fixed to replace the aspect and function of the lost or damaged tooth.

Usually, the surgery procedure for placing the dental implants in the mouth of the patient is a manual process, where the precision and trajectory of the final position of the dental implant is strongly associated with the skill and experience of the dentist. Thereto, the trajectory of the desired hole in the maxillary bone to which the implant is to be connected is studied, then the hole is drilled, and finally the implant is introduced in the drilled hole.

The hole in the maxillary bone is carried out by means of a drill, usually in the form of a bit, fixed to a tool having a motor, where the tool is handled by the expert hand of the dentist. However, a manual process may be imprecise and dangerous in case the human factor fails. Thereto, to reduce the risk in the manual surgery, there exist in the market systems for aiding in guiding the tools during surgery and placing the dental implants.

The most commonly known guiding systems are those using 3D radiological images of the teeth and maxillary bones of the patient. Using an intraoral scanner of the teeth of the patient, the treatment and position of the ideal position of the implant are virtually calculated. From the virtual planning, a guide splint having holes in the predefined directions along which the dental implant must be driven is generated. The guide splint guides the milling process in the correct direction, and also prepares the bed housing the implant in the bone and inserts the implant.

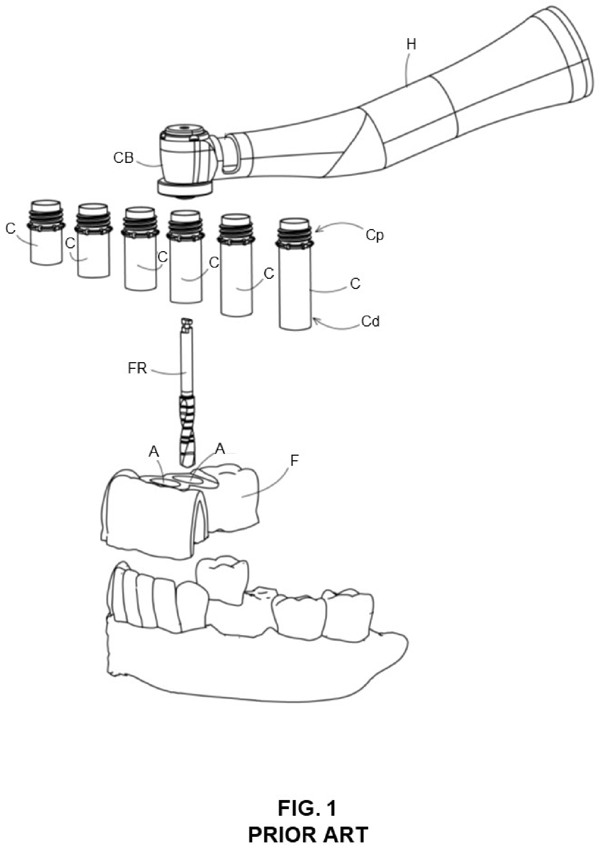

European patent application EP23382107, in the name of the applicant of the present application, discloses a guide system of this type. Fig. 1, that belongs to this document, shows the splint (F) made from 3D data of the anatomy of the patient, such that it fits perfectly on the mouth area where the implant is to be placed. The splint (F) has at least one hole (A), specifically two cylindrical holes (A) in the example shown in Fig. 1, whose position matches precisely the position of the orifice to be made in the maxillary bone of the patient. In guiding systems prior to application EP23382107, the holes (A) served directly as a guide for the drill (FR) that ultimately makes the orifice in the maxillary bone of the patient.

However, the guiding system of application EP23382107 further comprises a set of bushings (C) of different lengths configured to be fixed to the head (CB) of the tool (H) actuating the drill (FR). These normally cylindrical bushings (C) have a proximal end (Cp) and a distal end (Cd), and their diameter is essentially coincident with the inner diameter of the holes (A) of the splint (F). The proximal end (Cp) of the bushing (C) is fixed to the head (CB) of the tool (H), for example, by threading. When a bushing (C) is fixed to the tool (H), the drill (FR) passes longitudinally through the cylindrical inner cavity of said bushing (C) and protrudes through its distal end (Cd). Depending on the length of the bushing (C), the length of the stretch of drill (FR) protruding beyond the distal end (Cd) of said bushing (C) changes.

Therefore, once a bushing (C) is fixed to the tool (H), it can be introduced through the hole (A) of the splint (F), such that the bushing (C), and therefore the drill (FR) passing therethrough, are guided by said hole (A) to ensure a desired drilling trajectory. This system additionally enables for also establishing a drilling depth through the selection of a bushing (C) with a desired length. Indeed, the depth of the orifice will match the length of the stretch of drill (FR) protruding beyond the distal end (Cd) of the bushing (C).

While this system suitably solves the problem of how to provide guiding both in trajectory and depth for the orifices needed for dental implants, it is disadvantageous in that it has a reduced versatility with respect to the selection of the desired depth. Indeed, the number of depth options directly corresponds to the number of available bushings which, naturally, is limited due to space reasons.

In view of the above, there still exists a need in this field for more flexible guiding systems in connection with the depth of the orifice to be made.

On the other hand, the guiding system of application EP23382107 also discloses an adapter designed to enable the use of the cited bushings when using a tool not specifically designed therefor and whose head thus does not have fixation means for the bushings. As shown in Fig. 2, belonging to said document, in this case an adapter (AD) configured to be fixed to the head (CB) of the tool (H) is used. The adapter (AD) has the shape of an essentially cylindrical cover having an open angular section, and it also has longitudinal slits to improve its elasticity. This adapter (AD) is placed around the head (CB), and it is fixed thereto by means of a hook (G) configured to rotate and surrounding a neck (CU) of the tool (H) just adjacent the head (CB).

While this adapter solves the problem in question, allowing use of the bushings in combination with generic tools not specifically prepared thereto, it can still be improved.

### DESCRIPTION OF THE INVENTION

In this document, the term *"working position"* refers to a position where the fixation between bushing and head is sufficiently rigid so as to ensure a correct drilling process. In this respect, it is important to point out that, while the bushings of the prior art can potentially be coupled to the head in two different positions just by not threading the bushing completely, in that case those two positions would not be two working positions. Indeed, in that case a play between the male thread and the female thread would exist that, given the mechanical tensions the assembly would be subject to during a drilling operation, would prevent the planned trajectory to be accurately followed. For that reason, in a conventional threaded union such as that present in prior art bushings, the bushing must necessarily be threaded completely before carrying out the drilling operation, and therefore there is only one single working position. That is, in this case any hypothetical second position different from that where the bushing is completely threaded to the end would not be a working position.

In the present document, the terms "*proximal*" and "*distal*" have the usual meaning they have in the medical field. Specifically, the term "*proximal*" refers to an element or portion of an element that is closest to the health professional carrying out the drilling operation, while the term "*distal"* refers to an element or portion of an element that is farthest from the health professional carrying out the drilling operation.

In the present document, the term *"longitudinal direction"* refers, unless the context clearly indicates otherwise, to a direction containing the rotation axis of the tool head motor, the axis of the drill when fixed to the head, and the axis of the bushings when fixed to the head.

### First aspect: adjustable guiding system

The present invention solves the first problem mentioned above by means of a new adjustable guiding system for placing dental implants where the fixation of the bushings to the head is designed in such a way that each bushing can adopt at least two working positions longitudinally separated one from the other. That is, the bushing can be firmly fixed in a first working position and in a second working position, where the distance in the longitudinal direction between the distal end of the bushing and the head in the first position is different than in the second position.

This configuration is advantageous because it reduces the number of bushings needed to carry out a drilling operation since, in practice, each bushing carries out the function of two separate bushings of the conventional system. In other words, the system works as if each bushing had two slightly different lengths depending of whether it is coupled in the first working position or the second working position.

The first aspect of the invention is therefore directed to an adjustable guiding system for placing dental implants. This adjustable guiding system mainly comprises the following elements:
a) A tool comprising an actuation head. This tool is essentially similar to those known from the prior art except for the bushing fixation means, as disclosed in detail further down in the present document.
b) A drill configured to be fixed to the actuation head of said tool along a longitudinal direction. The drill is essentially a conventional drill according to the prior art.
c) A set of bushings configured to be fixed to the actuation head of the tool in a longitudinal direction. Thus, when the drill is fixed to said actuation head, said drill passes through an inner cavity of the bushings. The function of the bushing is, except for the design of the means for fixation to the head, essentially similar to that of the prior art bushings.
d) A splint having an anatomic shape configured to rest on the maxillary bone of the patient, the splint comprising at least a guide hole for the bushings. This splint is essentially similar to the splints used in the prior art.

The system disclosed until this point is essentially the same as a guiding system according to the prior art, for example, the guiding system disclosed in application EP23382107.

However, the adjustable guiding system of this first aspect of the present invention differs from the prior art guiding system in that the fixation between the actuation head and the bushing is configured to provide at least two working positions of the bushing separated longitudinally one from the other. That is, the distance in the longitudinal direction between the tool head and the distal end of the bushing in the first working position is different from the distance in the longitudinal direction between the tool head and the distal end of the bushing in the second working position. As mentioned above, this ensures that, in the adjustable guiding system of the invention, each bushing can, in practice, carry out the functions of two conventional bushings of two different lengths.

In principle, the fixation system between the actuation head and the bushing can be implemented in any manner provided it allows for a sufficiently firm and stable fixation in two longitudinally separated working positions. While protection for the the adjustable system of the invention is intended irrespective of how this fixation is implemented, the present document explicitly discloses two possible ways to implement such connection: bayonet connection and special thread connection.

Next, each of said two configurations is disclosed in greater detail.

### a) Bayonet connection

In this first preferred embodiment of the invention, the adjustable fixation between the actuation head and the bushing comprises a bayonet connection with at least two positions longitudinally separated one from the other.

A bayonet connection is a connection where two parts are joined by means of two elements cooperating one with the other through a relative displacement of one of said elements with respect to the other. In particular, an element is an elongated groove defined by two normally parallel edges, where one of said edges has an opening adjacent an end of the groove. The other element is a pin or protrusion whose dimensions are configured to enter the above-mentioned groove through the opening. Once inside, a relative displacement between the part having the groove and the part having the pin, for example, a linear displacement or a rotation displacement, causes the pin to move along the groove until arriving at the end opposite that where the opening is located. The end of the groove where the pin is housed is configured to retain the pin, for example, by means of a slight bump or a similar element. It is a well-known connection, a detailed description can be found in the following web pages of the Wikipedia:
https://es.wikipedia.org/wiki/Bayoneta (conexi%C3%B3n) (Spanish)
https://en.wikipedia.org/wiki/Bayonet mount (English)

A conventional bayonet connection as disclosed in the previous paragraph normally has one single position. In the present case, however, a bayonet connection having two positions is used, where these two positions are designed in such a way that there exist a separation in the longitudinal direction between the first and the second positions. This can be achieved in a number of ways, although two preferred configurations are disclosed herein: bayonet with a longitudinal step, and bayonet with inclined groove.

### Bayonet with longitudinal step

In a particularly preferred embodiment of the invention, a groove where a longitudinal step is implemented, that is, with a step in the longitudinal direction, is employed. More specifically, this bayonet connection comprises a groove and a pin particularly configured as follows:
- Groove
   It is a groove provided in one between the actuation head and the bushing. In other words, the groove could be in the actuation head, in whose case the pin would be in the bushing. Alternatively, the groove could be in the bushing, in whose case the pin would be in the actuation head.
   This groove is limited by an inlet edge and a support edge opposite said inlet edge, where the inlet edge has an opening provided at a central section of said inlet edge. That is, when the pin enters through the opening at the inlet edge, it can be selectively displaced in one of the other direction along the groove. The groove is essentially parallel to a plane perpendicular to the longitudinal direction, but the support edge has a longitudinal step separating a first section of groove from a second section of groove. Thus, there exist a distance in the longitudinal direction between the first section of the groove and the second section of the groove.
- Pin
   The pin is provided at the other between the actuation head and the bushing. That is, as mentioned above, the pin could be in the actuation head, in whose case the groove would be in the bushing or, alternatively, the pin could be in the bushing, in whose case the groove would be in the actuation head.
   In any case, the pin is configured to enter into the groove through the opening and, by means of a relative rotation between the groove and the pin, selectively be received in an end of the first section of groove or in an opposite end of the second section of groove. Therefore, when housed in the end of the groove located in the first section, there is a first distance in the longitudinal direction between the distal end of the bushing and the head of the tool while, when housed in the end of the groove located in the second section, there is a second distance in the longitudinal direction between the distal end of the bushing and the tool head.

### Bayonet with inclined groove

In an alternative preferred embodiment of the invention a groove with an inclination with respect to the longitudinal direction is used. More specifically, this bayonet connection comprises a groove and a pin configured as follows:
En una realización preferida alternativa de la invención se utiliza una ranura que está inclinada con relación a la dirección longitudinal. Más concretamente, esta unión en bayoneta comprende una ranura y un tetón configurados del siguiente modo:
- Groove
   As in the previous embodiment, the groove is provided at one between the actuation head and the bushing. The groove is also limited by an inlet edge and a support edge opposite said inlet edge, and the inlet edge comprises an opening positioned at a central section of said inlet edge. However, instead of having a step, in this case the groove is essentially parallel to an inclined plane, for example, having an inclination of an angle of between 1° and 10° with respect to the longitudinal direction.
- Pin
   The pin is provided at the other between the actuation head and the bushing. The pin is configured to enter the groove through the opening and, by means of a relative rotation between the groove and said pin, be selectively received at one end of the groove or at the opposite end of the groove. Since the groove is inclined with respect to the longitudinal direction, there is a distance in the longitudinal direction between the position corresponding to the pin when housed in an end and the position corresponding to the pin when housed in the opposite end.

Again, note that these two configurations are only example, but there are other ways to design a bayonet connection with two separate positions in the longitudinal direction, or even with more than two positions separated in the longitudinal direction.

### b) Special threaded connection

In this second preferred embodiment alternative to the use of a bayonet connection, a particular threaded connection specifically designed to ensure that a sufficiently firm and stable connection in the two or more working positions is achieved. Thereto, a suitable combination of the length of the shortest thread and the pitch difference between the male and female threads.

Indeed, the function of a threaded joint is that the different parts joined by the threads and/or the assemblies screw/nut mechanically behave as a single part. A conventional threaded connection is designed with a particular production clearance, that is a known parameter in this field including both a longitudinal clearance and a radial clearance. IN the case of the longitudinal clearance, it refers to the size difference in the longitudinal direction between the spirals of the male thread and the spirals of the female thread in which the former must enter. That is, taking a longitudinal direction passing through the spirals of the thread, the longitudinal clearance is the different along said line between the thickness of the female spiral and the thickness of the male spiral. Given that, for the male spiral to enter inside the female spiral, the thickness of the female spiral is always larger than that of the male spiral, the longitudinal clearance is always a positive number whose maximum value could be of tenths of millimetre at the most.

In a conventional thread, where the male and female threads have the same pitch, the relative position in the longitudinal direction of the male spirals and the corresponding female spirals in which the former enter is always the same. That is, lets's consider that each male spiral has a first side and a second side in the longitudinal direction, and also that each female spiral is limited in the longitudinal direction by a first side and a second side opposite the first side. In that case, the first side of each male spiral is separated a first distance from the first side of the female spiral it is inside of, and the second side of each male spiral is separated a second distance from the second side of the female spiral it is inside of. In a conventional thread, the first distance and the second distance would adopt the same value for all the spirals. The clearance would equal the sum of both distances. The above disclosure will be clearer from the description in connection to the figures provided further down in the present document.

This conventional configuration allows for an easy assembly and disassembly, since in all the spirals of the thread both sides of the male spiral are separated from the walls of the female spiral uniformly the first and second distances. However, this separation also entails a play between both parts in such a way that, in the absence of a tightening force, that is, if both parts are not tightened, they do not behave as a single unit. When the two parts are tightened, each male spiral is moved to an end of each female spiral it is inside of, and thereby a side of each male spiral contacts the corresponding wall of each female spiral. That is, for all the spirals of the thread, one of the distances equals zero, and the other distance equals the value of the longitudinal clearance. This configuration ensures a firm fixation lacking any play.

In the context of the present document, the existing play in the joined connection when not fully tightened would be critical with respect to the guiding precision of the tool and the drill, thereby compromising the whole guiding system. That would entail losing the connection between the 3D software planned position and the effective position of the drill in the bone of the patient. For that reason, as mentioned earlier, in a conventional thread there is only one single effective working position.

Thus, in this preferred embodiment of the invention, the fixation between the actuation head and the bushing comprises a special threaded connection between a first thread provided at the distal end of the actuation head and a second thread provided at the proximal end of the bushing. One of said threads is a male thread and the other is a female thread. Further, one between the first thread and the second thread has a total length that is substantially larger than the other. This feature allows for a relative longitudinal displacement of the actuation head and the bushing for alternating between the first working position and the second working position. In this context, it is indifferent which of the two threads is the male thread and which is the female thread, as well as which of the male and female threads is shorter. It should also be noted that the thickness and shape of all the male spirals and all the female spirals is constant.

Now, the threaded connection is configured such that, once the shortest thread is completely introduced into the longest thread, a first side of the first spiral of said short thread is constantly in contact with a first side of the corresponding spiral of the long thread, and a second side of the last spiral of the short thread is constantly in contact with a second side of the corresponding spiral of the long thread, where the first side of the first spiral of the short thread is opposite the second side of the last spiral of the short thread. That is, the first and last spirals of the short thread are in contact with longitudinally opposite sides of the corresponding spirals of the long thread, and therefore there is no play between both parts. In this situation, the intermediate spirals of the short thread do not touch the corresponding spirals of the long thread. This relative position of the threads of both parts is maintained irrespective of the part having the short thread displacing along the long thread of the other part. Therefore, each and every one of the possible positions the part having the short thread can adopt along the long thread is a working position.

This configuration is achieved by choosing a correct combination of the length of the short thread and the pitch difference between the short thread and the long thread. More preferably, the number of spirals minus one of the short thread times the pitch difference between the short thread and the long thread must be similar to the longitudinal clearance. As disclosed above, the longitudinal clearance is the difference in a longitudinal direction between the thickness of the female spirals and the thickness of the male spirals. In this context, the term "*similar*" means, for example, a different below 20%, more preferably below 15%, even more preferably below 10%, and even more preferably below 9%, 8%, 7%, 6%, 5%, 4%, 3%, 2%, or 1%.

In mathematical terms, the above-disclosed correlation is: $\left(Nec-1\right) ⋅ \left(Pr1-Pr2\right) \approx H$ where:
Nec is the number of spirals of the short thread
Pr1 is the pitch of the first thread
Pr2 is the pitch of the second thread
H is the longitudinal clearance

Furhter, since only the first and last spirals of the short thread contact the corresponding spirals of the long thread, according to another preferred embodiment of the invention the short thread lacks spirals in an intermediate section of its length. That is, the short thread would only comprise a first section having spirals and a last section having spirals, the part in question being a smooth cylinder in the intermediate section between the first and last sections. Each of the sections having spirals at the ends could have only between one and two spirals.

Thanks to this configuration, once all of the short thread is threaded to the long thread, a sufficiently firm fixation is achieved thanks to the contact between the first spiral and the last spiral of said short thread and the corresponding spirals of the long thread. That is, the short thread fits snugly in the long thread by means of the first and last spirals contacting at longitudinally opposite sides the walls of the corresponding complementary spirals. This fixation by fitting snugly is maintained as the short thread is introduced further into the long thread, since the contact of said first and last spirals of the short thread is maintained at all times. This configuration, therefore, not only allows for alternating between two single working positions, but it provides a continuum of possible working positions between the first and last working positions.

The conventional bushings disclosed in application number EP23382107 have a cylindrical shape, thereby being designed for their proximal end to pass through a hole of the splint until abutting against the maxillary bone of the patient. In a particularly preferred embodiment of the invention, however, each bushing further comprises a proximal portion having a first diameter and a distal portion having a second diameter smaller than the first diameter. That way, a shoulder is formed between both portions that is configured to abut against the edges of the hole of the splint. A second stop element is therefore obtained that, depending on the geometry of each case, can be used as an alternative to, or in combination with, the contact of the distal end of the bushing with the maxillary bone of the patient. Furthermore, abutting the shoulder of the bushing onto the edges of the hole of the splint is advantageous with respect to abutting its distal end onto the maxillary bone of the patient because doing so could contribute to reducing pain or discomfort in the gums.

In another preferred embodiment of the invention, each bushing further comprises at least a window allowing for the inner cavity through which the drill passes during the drilling process to be visible. In general, this window could be provided anywhere in the bushing, normally in an intermediate area or near its distal end. For example, when the bushing is formed by two portions having different diameters, two windows can be provided, each in the wall of each of said portions. The provision of one or more windows of this type is advantageous in that the health professional can check where the drill is at all times, such that any depth mark or indication present in the drill can be more easily employed.

On the other hand, conventional guiding systems have, irrespective of their configuration, a drawback in that the splint does not allow the health professional to see the movement of the drill as the hole in the maxillary bone of the patient is drilled. To solve this problem, in still another preferred embodiment of the invention a lateral wall of the splint comprises a hole for enabling the health professional to see the advancement of the drill during the drilling process. In a particularly preferred embodiment, this hole extends in the longitudinal direction, and it is open at its upper and lower ends. In another preferred embodiment, the hole has a windowlike shape limited by the lateral wall of the splint along its whole perimeter.

### Second aspect: guiding system with adapter

The present invention solves the second of the above-mentioned problems by means of a new and improve adapter with respect to the prior art adapter disclosed earlier. In particular, the adapter is fixed to the head of the tool in a simpler manner providing a more firm and reliable connection.

This second aspect of the invention is directed to a guiding system for placing implants mainly comprising the following features:
a) A tool comprising an actuation head. The tool is essentially similar to those known from the prior art except in connection with the fixation of the bushing, as disclosed in detail further down in the present document.
b) A drill configured to be connected to the actuation head of said tool along a longitudinal direction. The drill is essentially a conventional drill according to the prior art.
c) A set of bushings configured to be indirectly coupled to the actuation head of the tool in the longitudinal direction. Thus, when the drill is indirectly coupled to said actuation head, said drill passes through an inner cavity of the bushings. The function of the bushings is, except for the design of the indirect coupling means to the head, essentially similar to that of the prior art bushings.
d) A splint having an anatomic shape configured to abut against the maxillary bone of the patient, where the splint comprises at least a guide hole for the bushings. Again, this splint is essentially similar to the splints used in the prior art.
e) An adapter configured to be coupled to the actuation head of the tool. The adapter comprises a body and a connection element to attach the body to the head. The body is shaped as an essentially cylindrical sheath having an open angular section that fits over the actuation head. Further, the distal end of the body comprises connection means with the bushings.

The system disclosed above is essentially the same as a prior art guiding system, for example the guiding system disclosed in application EP23382107.

However, the guiding system according to this second aspect of the invention is characterized by the new design of the connection element. Specifically, the connection element comprises a threaded ring configured to be fixed to a thread provided at the proximal end of the body. Thus, when the body is fitted to the actuation head, the fixation of the threaded ring to the proximal end of the body, which is situated near a proximal end of the actuation head, fixes the body to the actuation head. More preferably, the body is configured to fit on the tool actuation head by sliding around said actuation head in a distal-proximal direction.

On the other hand, it must be pointed out that in this new guiding system the bushings may be fixed to the distal end of the adapter in any manner ensuring a suitable firmness. This includes both conventional connection systems, such as e.g. a conventional threaded connection of the proximal end of the bushing to the distal end of the adapter, and any of the longitudinally adjustable connection systems disclosed in the present document (for example, bayonet connection or special threaded connection).

### BRIEF DESCRIPTION OF THE DRAWINGS

Fig. 1 shows a view of a first configuration of the guiding system disclosed in prior art application EP23382107.
Fig. 2 shows a view of a second configuration of the guiding system disclosed in prior art application EP23382107.
Fig. 3 shows a view of a first embodiment of an adjustable guiding system with bayonet connection according to the present invention.
Fig. 4 shows a schematic view illustrating the shape of the connection groove in a first design of bayonet connection according to the present invention.
Fig. 5 shows a schematic view illustrating the shape of the connection groove in a second design of bayonet connection according to the present invention.
Figs. 6a-6c show respective detailed views of the bayonet connection implemented in the adjustable guiding system shown in Fig. 3.
Fig. 7 shows perspective views of the adjustable guiding system with bayonet connection of Fig. 3 in the two possible working positions.

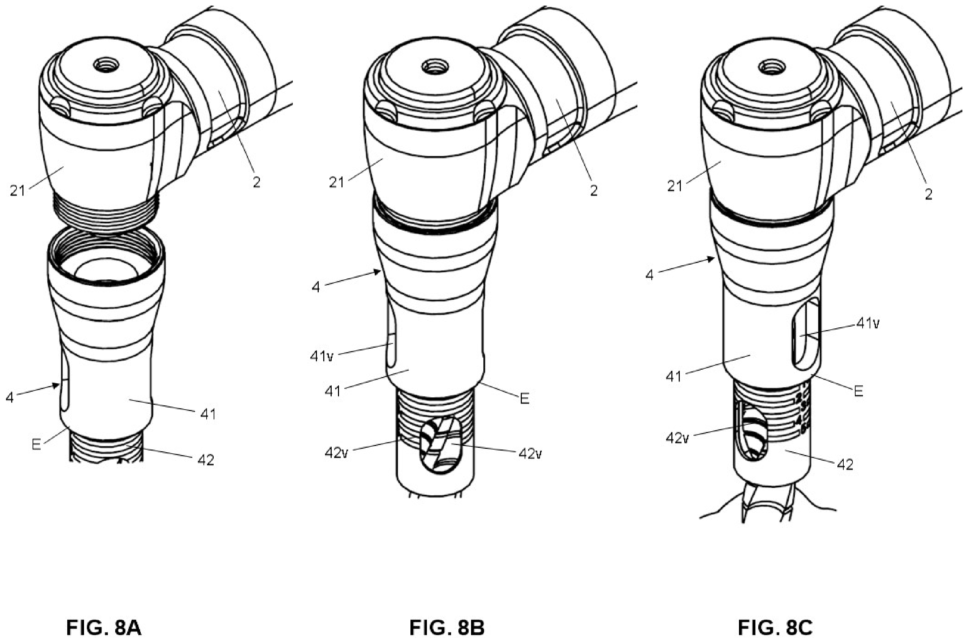

Figs. 8A-8C show respective detailed views of an adjustable guiding system having a threaded connection according to the present invention.
Fig. 9 shows a cross-sectional schematic view of a portion of a conventional thread showing the different parameters disclosed in the present document.
Figs. 10A-10D show respective longitudinal sections of some threaded connections, where the connection of Fig. 10A is conventional, the connections of Figs. 10B-10C show a wrong combination of pitch correction and length of the short thread causing interference between the threads, and the connection of Fig. 10D corresponds to a preferred embodiment of the present invention.
Fig. 11 shows a detailed view of a special thread according to the invention that is similar to that shown in Fig. 10D.
Fig. 12 shows perspective views of the adjustable guiding system of Fig. 3 with a threaded connection in two possible working positions, as well as disconnected.
Fig. 13 shows a first embodiment of splint where the hole allowing the health professional to see the advancement of the splint is open at both ends.
Fig. 14 shows a second embodiment of splint where the hole allowing the health professional to see the advancement of the splint is window shaped.
Fig. 15 shows another exemplary guiding system having an adapter for enabling use with tools not specifically designed for the fixation of the bushings.
Fig. 16 shows a detailed view of the adapter coupled to the tool head.

### PREFERRED EMBODIMENT OF THE INVENTION

A preferred embodiment of the adjustable guiding system (1) for installing dental implants according to the present invention is disclosed below with reference to the attached drawings 3-12.

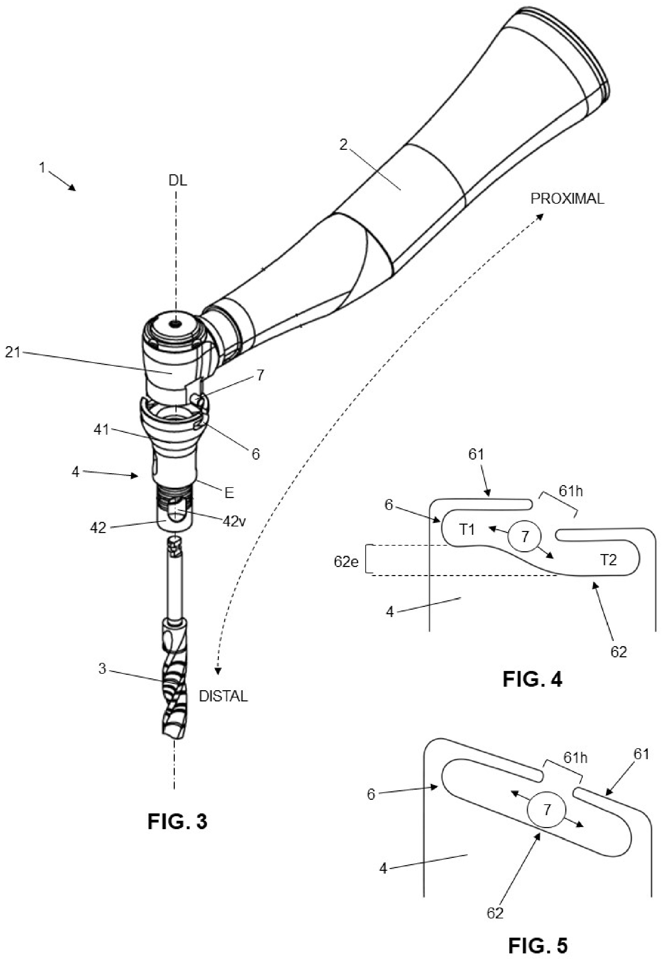

Fig. 3 is a view of the adjustable guiding system (1) for placing dental implants showing the main components. The system (1) comprises a tool (2) having a head (21) whose distal end is configured for attachment of a drill (3). Inside the head (21) there is additionally a small electric motor causing an axle oriented in the longitudinal direction (DL) to rotate. Thus, when the drill (3) is coupled to the distal end of the head (21), its base is attached to the axle, such that the drill (3) rotates when the motor is actuated. The shape and internal structure of the tool (2) as a whole is similar to that of a conventional tool of this type, except with regards the fixation of the bushings (4), as disclosed further down in the present document.

A distal end of the tool (2) is configured for the fixation of a proximal end of a bushing (4). The bushing (4) is formed by two portions (41, 42), specifically a first portion (41), or proximal portion, and a second portion (42), or distal portion. The diameter of the first portion (41) is larger than the diameter of the second portion (42) at the area where both are joined, such that in that place a radial shoulder (E) is formed. Depending on the geometry of the bushing (4) and the splint (5), this shoulder (E) could abut against the edges of the holes (A) of the splint (5) to limit the depth of the hole made by the drill (3). That is, the stop action that the bushing (4) carries out during the drilling process could take place when the distal end of the second portion (42) bumps into the maxillary bone of the patient, or else when the shoulder (E) abuts against the edges of the hole (A) of the splint (5). This configuration of the bushing (4) thus provides more flexibility as to how to attain the stop action in the depth of the hole made by the drill (3), and it additionally prevents the abutting taking place against the maxillary bone of the patient, which could be unsuitable for certain cases.

An internal longitudinal cylindric channels passes through both portions (41, 52), such that the drill (3) goes through said channel when both elements, drill (3) and bushing (4), are coupled to the head (21). Naturally, the drill (3) is longer than the bushing (4), such that the distal end of the drill (3) protrudes a certain distance further the distal end of the bushing (4). In a conventional system such as those shown in Figs. 1 y 2, by choosing particular bushing (4) from a set of bushings (4) having different lengths, the length difference between the drill (3) and the bushing (4) can be adjusted. This allows for selecting the depth of the hole made by the drill (3).

The peculiarity of the adjustable guiding system (1) of the present invention is that the fixation system allowing for the bushing (4) to be coupled to the head (21) is adjustable, that is, allows for the bushing (4) to be fixed in two longitudinally separate working positions.

Again, note that a "*working position*" is that which has a sufficient stability and rigidity to suitably carry out the drilling operation. In the prior art guiding systems, such as the one shown in Fig. 1, the fixation of the bushing (C) to the head (CB) is carried out by means of a conventional thread. In a conventional thread, both the male thread and the female thread have the same pitch. Therefore, to ensure a sufficiently firm fixation the bushing (C) needs to be threaded fully into the head (CB). Insufficiently deep threading of the bushing (C) into the head (CB) would entail the presence of a play which would not allow for the hole in the maxillary bone to carried out along the desired trajectory. Therefore, by attaching a bushing (C) to the head (CB) of a conventional tool (H) by means of an insufficient thread, even though it would imply a longitudinal separation with respect to a position where the bushing (C) is threaded completely, a *"working position"* is not attained.

The present invention discloses two manners in which to carry out this fixation that provide, at least, two longitudinally separated working positions: bayonet connection and special thread connection.

### Bayonet connection

A first configuration of the bayonet connection is shown the abovementioned Fig. 3. Fig. 4 shows a detailed view of this connection with much more detail.

As shown, the bayonet connection comprises a groove (6), placed at an edge of the proximal end of the bushing (4), and a pin (7), which protrudes radially from the edge of the distal end of the head (21). The proximal end of the bushing (4) has a larger diameter than the distal end of the head (21), such that to attach the bushing (4) the distal end of the head (21) can be fitted into the proximal end of the bushing (4).

The groove (6) is essentially parallel to a perpendicular plane to the longitudinal direction (DL), and it is essentially limited by two edges: an inlet edge (61) and a support edge (62). The inlet edge (61) is positioned at the proximal end of the groove (6), and it has an opening (61h) positioned at a central section. This is the opening (61h) through which the pin (7) will be introduced. The support edge (62) is positioned at the distal end of the groove (6). The support edge (62), along which the pin (7) moves when the attachment using this connection system is used, has two areas parallel to a plane perpendicular to the longitudinal direction (DL) connected on to the other by a longitudinal step (62e). Thus, the groove (6) is divided into two parts or portions separated one from the other in the longitudinal direction: a first section (T1) and a second section (T2).

Thus, when the distal end of the head (21) is introduced into the proximal end of the bushing (4), the pin (7) can be passed through the opening (61h) of the inlet edge (61) of the groove (6). Once inside, in the position shown in Fig. 4, the bushing (4) can be rotated in two directions. If rotated in a first direction, the pin (7) will move along the first section (T1) of the tool (6) until arriving at one of the ends. If rotated in a second direction, the pin (7) will move along the second section (T2) of the groove (6) until arriving at the opposite end. Depending on the direction, the distance between the distal end of the bushing (4) and the distal end of the head (21) will vary a distance corresponding to the height of step (61h).

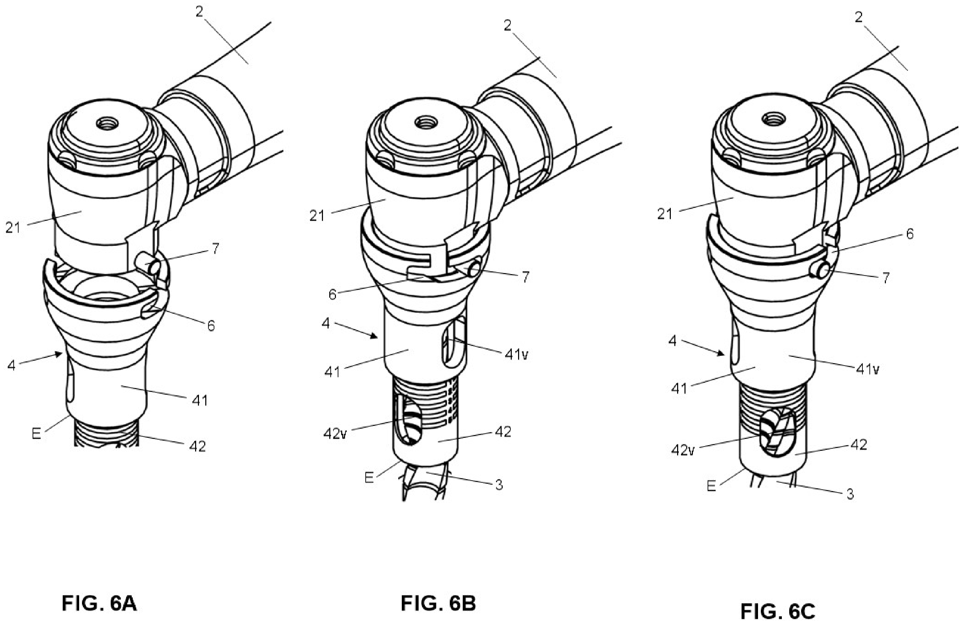

Figs. 6A-6C show this process with greater detail. In Fig. 6A, the bushing (4) is about to be attached to the head (21). In Fig. 6B, the bushing (4) has moved sufficiently in the longitudinal direction so as to cause the pin (7) to enter into groove (6) through the opening (61h) and, thereafter, is has been rotated in a certain direction. The result is that the pin (7) is housed at the end of the first section (T1) of the groove (6), and the bushing (4) is therefore attached to the head (21) in a first working position. Similarly, in Fig. 6C the pin (7) has been introduced through the opening (61h) and the bushing (4) has been rotated in the opposite direction as above. In this case, the pin (7) is housed at the end of the second section (T2) of the groove (6), and it is thereby fixed t the head (21) at the second working position. As shown, the end of the drill (3) protrudes further in the first working position (Fig. 6B) than in the second working position (Fig. 6C).

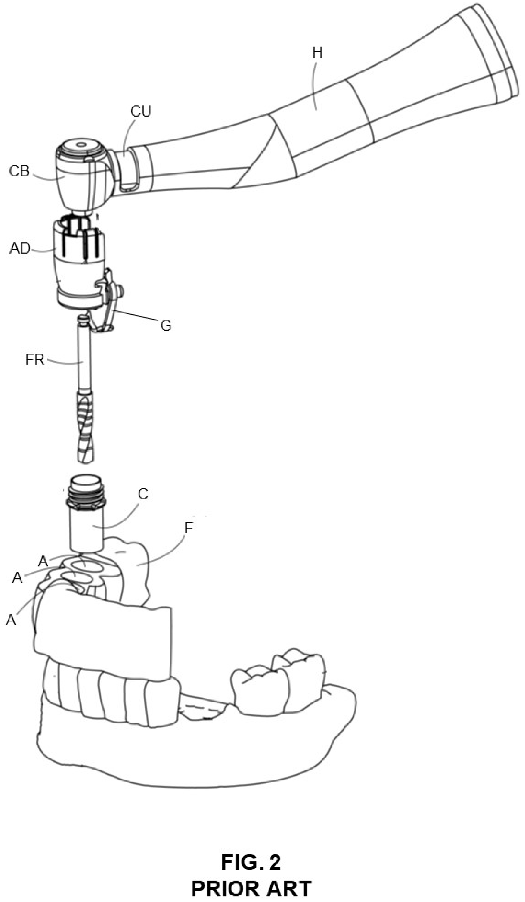

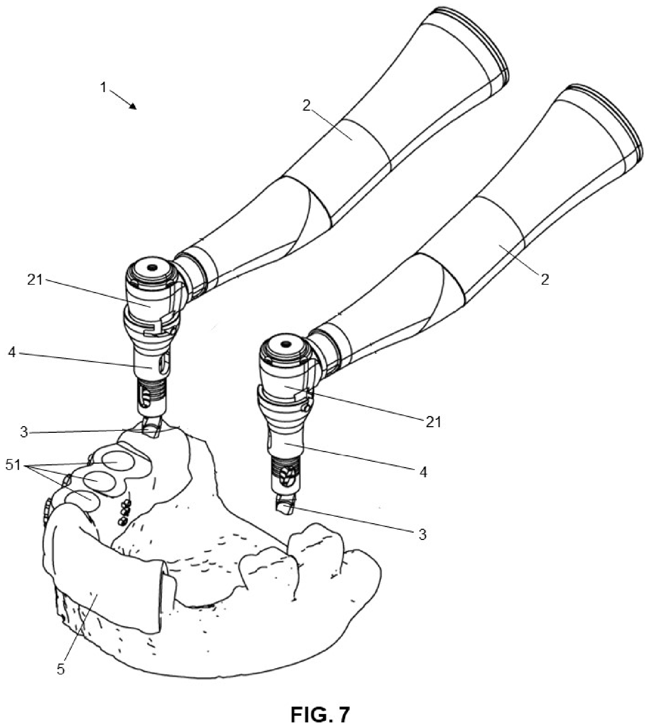

Fig. 7 shows a guiding system (1) as disclosed in the previous lines with the bushing (4) respectively fixed at the second and first working positions. In this figure, the maxillary bone of the patient is also represented with a splint (5) placed thereon. As disclosed earlier in the present document, the splint (5) of the system of the invention is essentially the same as the prior art known splints of any of Figs. 1 and 2. Specifically, in the example shown in Fig. 7, the splint (5) has three holes (51) intended to guide the drilling process by means of the distal portion of the bushings (4) snugly fitting therein.

On the other hand, Fig. 5 shows a second configuration of the bayonet connection that is alternative to that disclosed in Fig. 4. In this case, as shown, the groove (6) is not essentially contained in, or is essentially parallel to, a plane perpendicular to the longitudinal direction (DL). On the contrary, the groove (6) is parallel to a plane that is inclined with respect to the longitudinal direction (DL). This inclination may be, for example, of several degrees, for example, between 1° and 10°, or even of up to 20°. Thus, when the pin (7) moves along the groove (6) during the coupling process between the bushing (4) and the head (21), at the same time a displacement in the longitudinal direction takes place. The consequence is that there exist a difference in the longitudinal direction between a first working position corresponding to the pin (7) when housed in one of the ends of the groove (6) and a second working position corresponding to the pin (7) housed in the opposite end of the groove (6).

### Special threaded connection

This configuration is disclosed herein taking as an example a short male thread and a long female thread although, as mentioned above in this document, it is irrelevant which of the threads is male or female, and also which of them is implemented in the bushing and which in the actuation head.

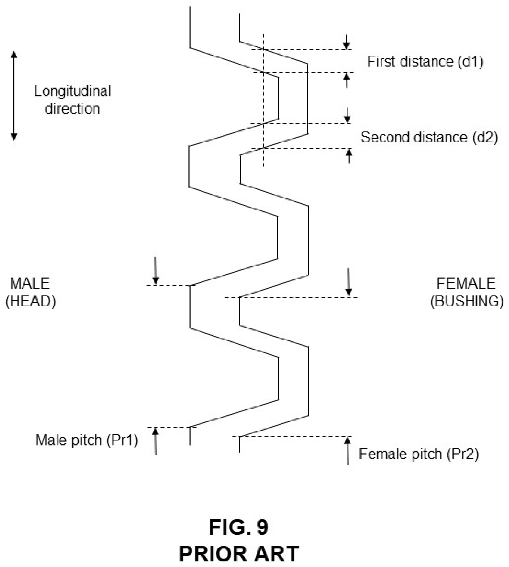

Fig. 9 shows a detailed view of a thread where the different parameters are represented. Specifically, it shows:
Pr1: pitch of the male thread (which will be referred to as first thread, that is, the thread of the head).
Pr2: pitch of the female thread (which will be referred to as the second thread, that is, the thread of the bushing).
d1: first distance (which is the distance between the upper side of the male spiral and the upper side of the female spiral it is housed in).
d2: second distance (which is the distance between the lower side of the male spiral and the lower side of the female spiral it is housed in).

The clearance (H) is the sum of the first distance (d1) and the second distance (d2). In mathematical terms: $H = d 1 + d 2$

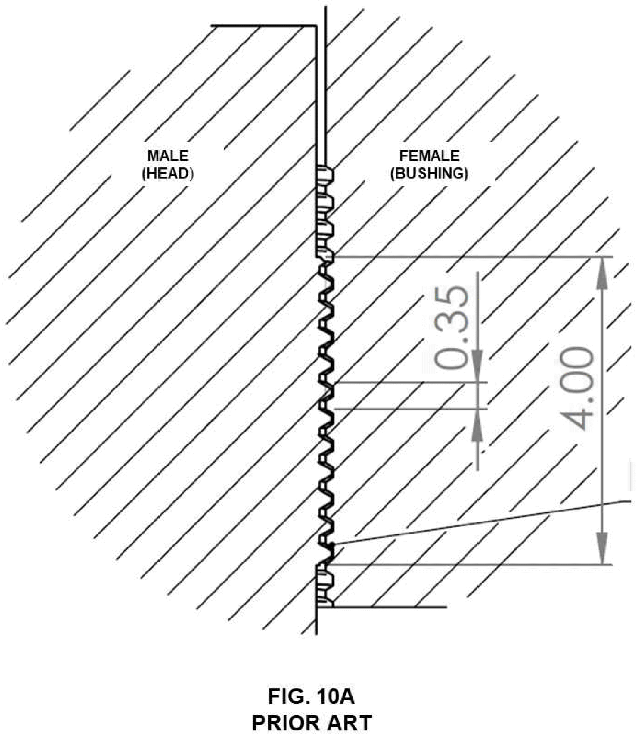

Fig. 10A shows a conventional threaded connection where the spirals of both threads have a trapezoidal shape. The length of the male thread is 4 mm, while the length of the female thread is substantially larger and, conventionally, both threads, male and female, have the same pitch of 0,35 mm. Since the pitch is coincident, the first distances (d1) and the second distances (d2) are the same for all the spirals. This configuration ensures a play between both parts that facilitates the displacement of the bushing with the female thread with respect to the head with the female thread just by simply threading and unthreading naturally. However, to achieve a firm fixation, the head with the male thread needs to be threaded fully towards the upward end shown in the figure. Any other position would not provide a firm connection because of the clearance mentioned above.

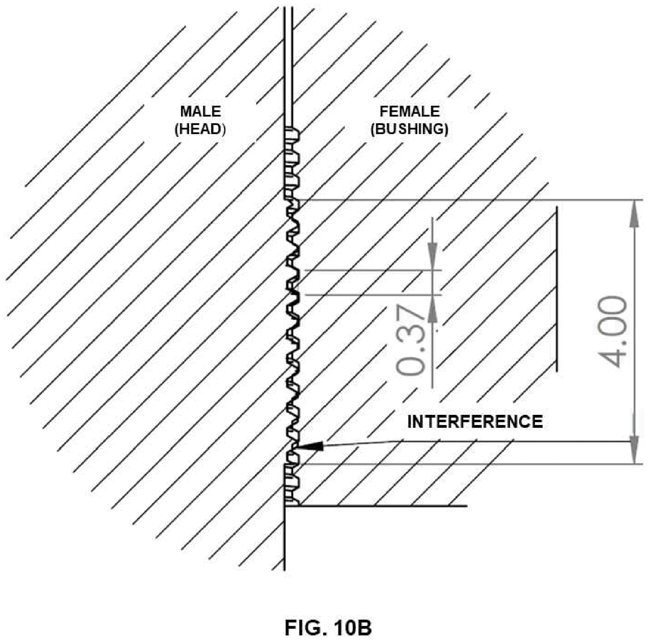

Fig. 10B shows a threaded connection where the female thread still has a pitch of 0,35 mm and the male thread has a pitch of 0,37 mm. The length of the male thread is still 4 mm. As a consequence, the first and second distances are different in each of the spirals, said spirals becoming more and more compressed as the male thread is introduced into the female thread, until the last spirals of the male thread interfere with the adjacent spirals of the female thread. This pitch difference, therefore, would not be feasible, since it is impossible to thread both parts.

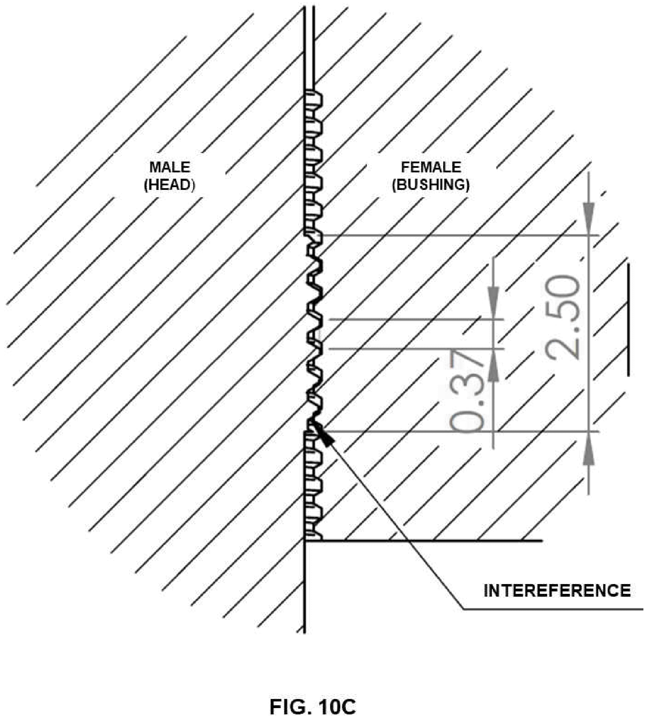

In Fig. 10C the pitches of 0,35 and 0,37 of the female and male threads are maintained, but the length of the male thread is reduced to 2,3 mm. In this case, there still an interference at least in the two last spirals of the male thread, and therefore it is also not a feasible combination.

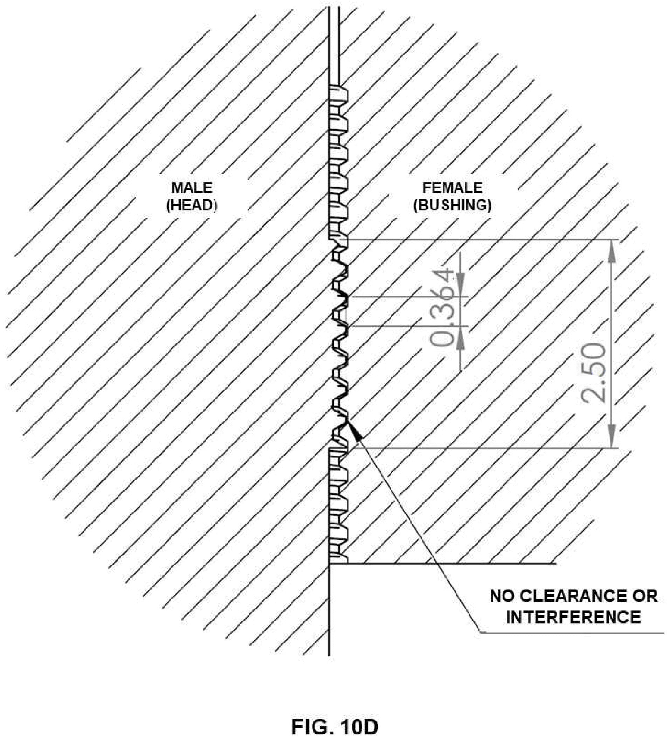

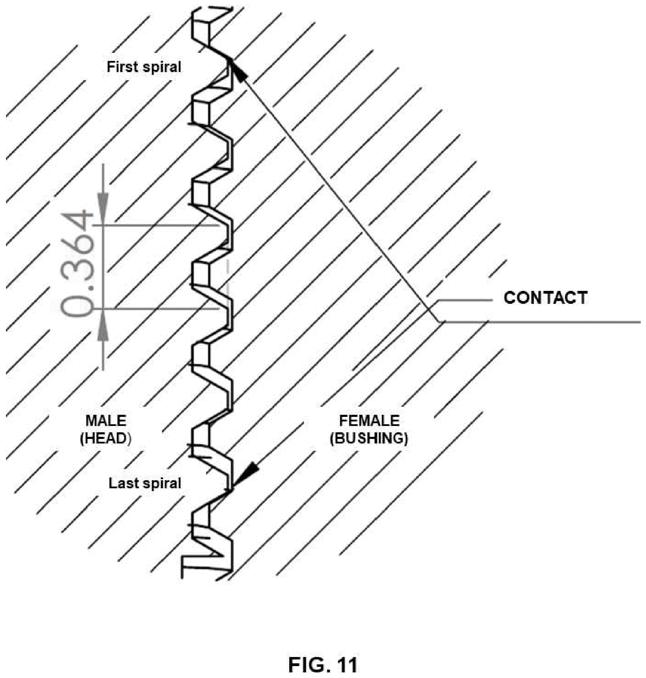

Lastly, Fig. 10D shows a combination where the pitch of the female thread is 0,35, the pitch of the male thread is 0,364, and the length of the male thread (the shortest thread) if 2,50 mm. Fig. 11 shows a detailed view of the area of Fig. 10D where the spirals of the male thread are provided. These figures show that, in the last spiral of the male thread, that positioned in the lowest position in the figure, the second distance is zero. That is, the lower side of the last male spiral is in contact with the lower side of the female spiral it is housed in. Similarly, at the first spiral of the male thread, that positioned in the highest position in the figure, the first distance is also zero. That is, the upper side of the first male spiral is in contact with the upper side of the female spiral it is housed in. In other words, the first and last spirals of the male thread are tightly *"fitted"* against opposite sides of the respective spirals of the female thread. These two support points ensure a sufficiently stable connection for a precise guiding and, at the same time, enable the bushing with the female thread to be threaded along the male thread of the head an arbitrarily long distance. Therefore, once the male thread is completely introduced into the female thread, any relative position between both can be selected as the working position.

The relationship mentioned earlier in the present document, that is, the following relationship, is fulfilled: $\left(Nec-1\right) ⋅ \left(Pr1-Pr2\right) \approx H$

Indeed, the parameters implicated adopt the following values: $Nec \left(number of spirals of the male thread\right) = 7$ $Pr 1 \left(pitch of the male thread\right) = 0 , 364$ $Pr 2 \left(pitch of the female thread\right) = 0 , 35$ $H \left(clearance\right) = d 1 + d 2 = 0 , 09 mm$

Therefore: $\left(Nec-1\right) ⋅ \left(Pr1-Pr2\right) : \left(7-1\right) ⋅ \left(0,364-0,35\right) = 6 ⋅ 0 , 014 = 0 , 084$ $H = 0 , 09$

Now, 0,0847 ≈ 0,09, since they only differ by 7%. Configurations rendering male and female thread combinations that can be threaded and where the *"fitting* "effect of the first and last spiral of the short thread in the long thread takes place can be selected using this formula. Far from this relationship, it will be impossible to introduced one thread into the other, ore else no *"fitting"* effect will take place.

Note that, since the contact takes place herein only at the first and last spirals of the male thread, that is, of the short thread, it would be potentially possible to eliminate the intermediate spirals of the short thread. That is, the head could have only two spirals separated by a flat cylindrical space.

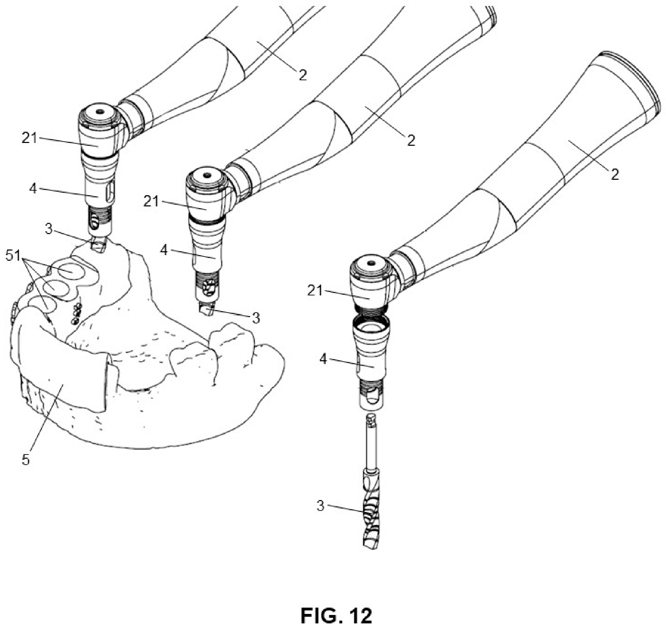

Fig. 12 shows a perspective view of a system (1) having a special thread such as that disclosed where the head (4) is attached to the head (21) of the tool (2) in two longitudinally separated positions.

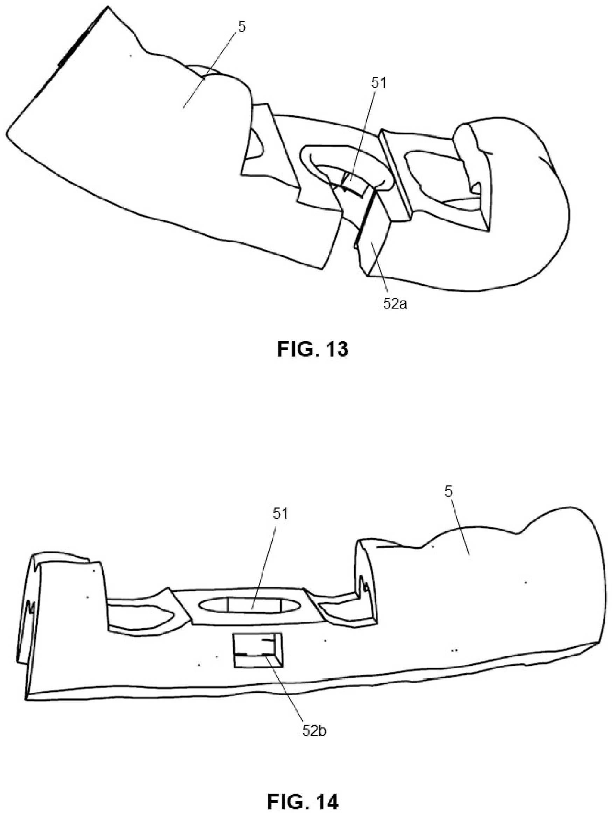

Figs. 13 and 14 show to preferred embodiments of splints (5) according to the present invention, each of them respectively shown in plan and front view. In this specific case, both splints (5) have only a single guiding hole (51).

In Fig. 13, the splint (5) has a hole (52a) that partially interrupts the wall at one of the sides of the hole (51) adjacent the maxillary bone of the patient. That is, the hole (52a) is a groove through the wall at said side of the hole (51) in an up-down direction, or a direction in parallel to the longitudinal direction (DL). Therefore, when the distal end of the drill (3) and the distal end of the bushing (4) are introduced into the hole (51) to carry out the drilling process, the advancement of the drill (3) and the distal end of the bushing (4) along the hole (51) can be visually followed.

In Fig. 14, on the contrary, the hole (52b) does not completely interrupt the lateral wall of the hole (51) adjacent the maxillary bone of the patient, but it only comprises a window that is limited at the four sides.

Lastly, an exemplary guiding system (1) for the installation of dental implants with a modified adapter according to the present invention is disclosed making reference to the attached drawings 15-16.

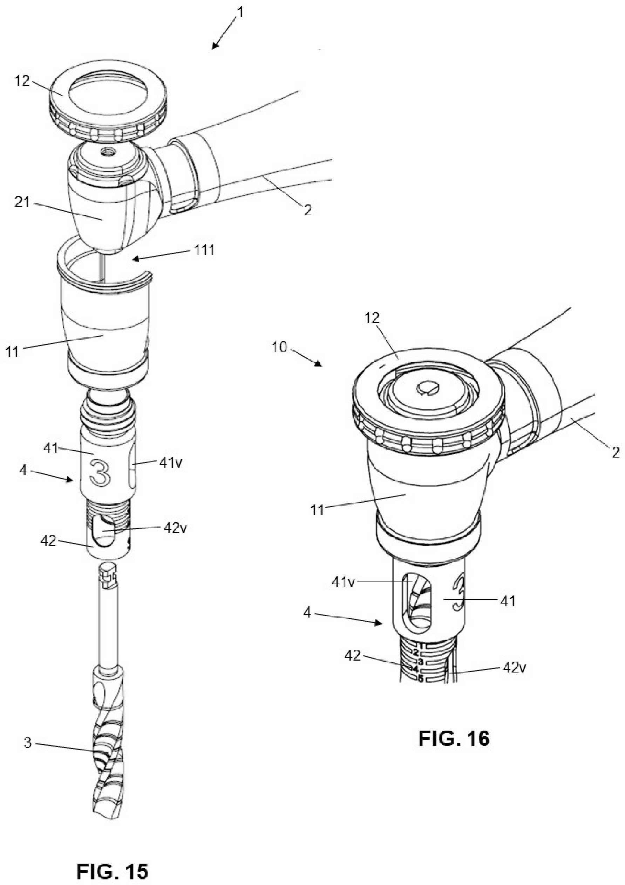

In this case, the adapter (10) enables the user to use the bushing (4) system with a conventional tool (2) that has a modified configuration having advantages with respect to the prior art. In particular, as shown in Fig. 15, the adapter (10) is formed by to physically separate elements: body (11) and connection element (12).

The body (11) is relatively similar to that of the prior art shown in Fig. 2, since it is shaped as a cylindrical/ellipsoidal sheath having an open angular section (111). However, instead of having grooves providing flexibility, the body (11) of the present invention is mainly continuous and, further, it is made of metal. This body (11) is designed to fit on the head (21) of the conventional tool (1) by displacing it upwards in the position of the figures, such that it does not require any flexibility. Once positioned, as shown in Fig. 16, the body (11) almost completely surrounds the head (21), mainly with the exception of the area where the connection between the handle of the tool (2) and the head (21) itself is located.

The connection element (12) is shaped as a threaded ring, and its function is to firmly attach the body (11) in a position where it surrounds the head (21) of the tool (2). Thereto, the connection element (12) is threaded to a thread provided at the proximal end of the body (11). The connection element (12) may also have an inwardly directed radial flange such that, once completely threaded to the distal end of the body (11), said body is completely fixed.

Lastly, the body (11) has a distal end that optionally can comprise a completely closed annular area, that is, where the open angular section is not present. This distal end has a thread to which the bushings (4) can be attached. Alternatively, although not shown explicitly in Figs. 15-16, the fixation means for the bushings (4) could be any of those disclosed earlier in the present document to allow for two or more longitudinally separated working positions, such as for example the bayonet connection or the special thread connection.

## Claims

1. Adjustable guiding system (1) for placing dental implants, comprising:
- a tool (2) comprising an actuation head (21);
- a drill (3) configured for fixation to the actuation head (21) of said tool (2) along a longitudinal direction (DL);
- a set of bushings (4) configured for fixation to the actuation head (21) of the tool (2) in the longitudinal direction (DL) such that, when the drill (3) is fixed to said actuation head (21), said drill (3) passes through an inner cavity of the bushings (4); and
- a splint (5) having an anatomical shape configured to abut against the maxillary bone of the patient, the splint (5) comprising at least one guide hole (51) for the bushings (4),
**characterized in that** the fixation between the actuation head (21) and the bushing (4) is configured to provide at least two working positions of the bushing (4) longitudinally separated one from the other.

2. Adjustable guiding system according to claim 1, where the fixation between the actuation head (21) and the bushing (4) comprises a bayonet connection with at least two positions longitudinally separated one from the other.

3. Adjustable guiding system (1) according to claim 2, where the bayonet connection comprises:
- a groove (6) provided at one between the actuation head (21) and the bushing (4), where said groove (6) is limited by an inlet edge (61) and a support edge (62) opposite said inlet edge (61), where the inlet edge (61) is provided with an opening (61h) placed at a central section of said inlet edge (61), where said edge (6) is essentially parallel to a plane perpendicular to the longitudinal direction (DL) and where the support edge (62) has a longitudinal step (62e) separating a first groove section (T1) from a second groove section (T2; and
- a pin (7) provided at the other between the actuation head (21) and the bushing (4), where the pin (7) is configured to enter the groove (6) through the opening (61h) and, by means of a relative rotation between the groove (6) and said pin (7), selectively be housed at an end of the first groove section (T1) or at the opposite end of the second groove section (T2).

4. Adjustable guiding system (1) according to claim 2, where the bayonet connection comprises:
- a groove (6) provided at one between the actuation head (21) and the bushing (4), where said groove (6) is limited by an inlet edge (61) and a support edge (62) opposite said inlet edge (61), where the inlet edge (61) is provided with an opening (61h) located at a central section of said inlet edge (61), where said groove (6) is essentially parallel to a plane inclined with respect to the longitudinal direction (DL); and
- a pin (7) provided at the other between the actuation head (21) and the bushing (4), where the pin (7) is configured to enter the groove (6) through the opening (61h) and, by means of a relative rotation between the groove (6) and said pin (7), selectively be housed at an end of the groove (6) or at the opposite end of the groove (6).

5. Adjustable guiding system (1) according to claim 1, where the fixation between the actuation head (21) and the bushing comprises a threaded connection between a first thread provided at the distal end of the actuation head (21) and a second thread provided at the proximal end of the bushing (4), where one of the threads is a male thread and the other is a female thread, where one between the first thread and the second thread has a total length that is substantially larger than the other to enable a relative longitudinal displacement between the first working position and the second working position, and where said threaded connection is configured such that, once the short thread has be completely introduced into the long thread, a first side of the first spiral of said short thread is constantly in contact with a first side of the corresponding spiral of the long thread, and a second side of the last spiral of the short thread is constantly in contact with a second side of the corresponding spiral of the long thread, where the first side of the first spiral is opposite the second side of the last spiral.

6. Adjustable guiding system (1) according to claim 5, where the product of the number of spirals minus one of the short thread times the pitch difference between the short thread and the long thread must be similar to the longitudinal clearance, where the longitudinal clearance is the difference in a longitudinal direction between the thickness of the female spirals and the thickness of the male spirals.

7. Adjustable guiding system (1) according to any of claims 5-6, where the short thread lacks spirals at an intermediate section of its length.

8. Adjustable guiding system (1) according to any of the previous claims, where each bushing (4) comprises a proximal portion (41) having a first diameter and a distal portion (42) having a second diameter smaller than the first diameter, such that a step (E) is formed between both portions (41, 42) configured to abut against the edges of the hole (A) of the splint (5).

9. Adjustable guiding system (1) according to any of the previous claims, where each bushing (4) further comprises at least a window (41v, 42v) enabling vision of the inner cavity through which the drill (3) passes during the drilling process.

10. Adjustable guiding system (1) according to any of the previous claims, where a side wall of the hole (51) of the splint (5) comprises a hole (52a, 52b) to enable vision of the advancement of the drill (3) during the drilling process.

11. Adjustable guiding system (1) according to claim 10, where the hole (52a) extends in the longitudinal direction and it is open at the upper and lower sides.

12. Adjustable guiding system (1) according to claim 10, where the hole (52b) is windowshaped and limited by the side wall of the splint (5) along all its perimeter.

13. Guiding system (1) for placing dental implants, comprising:
- a tool (2) comprising an actuation head (21);
- a drill (3) configured for fixation to the actuation head (21) of said tool (2) along a longitudinal direction (DL);
- a set of bushings (4) configured for indirect fixation to the actuation head (21) of the tool (2) in the longitudinal direction (DL) such that, when the drill (3) is indirectly fixed to said actuation head (21), said drill (3) passes through an inner cavity of the bushings (4); and
- a splint (5) having an anatomical shape configured to abut against the maxillary bone of the patient, the splint (5) comprising at least one guide hole (51) for the bushings (4),
- an adapter (10) configured to be coupled to the actuation head (21) of the tool (2), the adapter comprising a body (11) and a connection element (12) for fixing the body (11) to the head (21), where the body (11) is shaped as an essentially cylindrical sheath having an open angular section (111) fitting on the actuation head (21), where a distal end of the body (11) comprises fixation means for the bushings (4),
**characterized in that** the connection element (12) comprises a threaded ring configured for fixation to a thread located at a proximal end of the body (11) such that, when the body (11) is fitted onto the actuation head (21), the fixation of the threaded ring (12) to the proximal end of the body (11) located adjacent a proximal end of the actuation head (21) attached the body (11) to the actuation head (21).

14. Guiding system (1) for placing implants according to claim 13, where the body (11) is configured to fit onto the actuation head (21) by sliding around said head (21) longitudinally in a distal-proximal direction.
